# FASCICULE DE BREVET EUROPEEN

(11) **EP 2 934 988 B1**
(45) Date de publication et mention de la délivrance du brevet: **04.03.2020**
(21) Numéro de dépôt: 13779833.6
(22) Date de dépôt: 21.10.2013
(51) Int. Cl.: B62D 21/11, B60G 21/055

(54) **DISPOSITIF DE LIAISON D'UN BERCEAU AUTOMOBILE**
VERBINDUNGSVORRICHTUNG FÜR EINE LADESTATION EINES KRAFTFAHRZEUGS
LINK DEVICE FOR A MOTOR VEHICLE CRADLE

(30) Priorité: 20.12.2012 FR 1262392
(43) Date de publication de la demande: 28.10.2015
(73) Titulaire: Renault S.A.S., 92100 Boulogne-Billancourt (FR)
(72) Inventeur: BOURLON, Franck, 28700 Aunay-sous-Auneau (FR); DUBREUIL, Bertrand, 92300 Levallois-Perret (FR)
(86) Numéro de dépôt international: PCT/EP2013/071982
(87) Numéro de publication internationale: WO 2014/095124

(56) Documents cités:
- EP-A1- 2 050 597
- WO-A1-2013/178896
- FR-A1- 2 960 507
- JP-A- H10 258 763
- JP-A- 2004 050 994

## Description

La présente invention se rapporte au domaine technique des berceaux automobile et vise notamment un agencement compact d'une pièce de liaison de tels berceaux à la structure de caisse du véhicule. L'invention est également relative à un véhicule automobile comprenant un tel agencement.

Il est connu, dans ce domaine technique, des berceaux reliés aux longerons par l'intermédiaire de cornes, tel le document FR 2 966 418, où la corne est fixée au coude d'un longeron par une pièce intermédiaire. Le document JP H10 258763 divulgue une fixation de la barre anti-dévers intégrée au pied de la corne, le document FR 2 960 507 divulgue des chapeaux de paliers d'une barre anti-dévers située au pied de la corne et le document WO 2013/178896 divulgue un ensemble de palier d'articulation d'une barre anti-dévers adapté au logement de palier en forme cintrée en U de réception d'un palier de la présente invention.

La présente invention vise à alléger une telle structure en limitant le nombre de fixations, tout en conservant les propriétés de l'assemblage.

La présente invention est atteinte à l'aide d'un dispositif de liaison entre un berceau d'un véhicule automobile et un élément de structure de caisse dudit véhicule, ledit dispositif comprenant une corne monobloc présentant une base de raccordement au berceau ainsi qu'une partie supérieure de raccordement à un élément de structure de caisse, la corne présentant, entre la base et la partie supérieur, une partie latérale comportant une forme cintrée en U de réception d'un palier de guidage d'une barre anti-dévers, la partie latérale comportant deux faces planes aux extrémités de la forme en U pour la fixation d'une plaque de compression du palier de guidage,
l a partie latérale de la corne étant disposée vers l'arrière du véhicule lorsque la corne est fixée sur le berceau, caractérisé en ce que
l a paroi délimitant la forme cintrée de la partie latérale présente une diminution locale d'épaisseur.

Selon d'autres caractéristiques complémentaires :
- la corne est en aluminium, issue de moulage, et le berceau est en acier.

La présente invention vise également un véhicule automobile comportant une caisse supportant un berceau, caractérisé en ce que le berceau est lié à un élément de structure de caisse par un dispositif selon l'une des caractéristiques précédemment mentionnées.

Avantageusement, le berceau est disposé à l'avant du véhicule.

La présente invention sera mieux comprise à l'aide de la description qui va suivre, en référence aux figures annexées, parmi lesquelles :
- la figure 1 est une vue en perspective d'un berceau équipé de la présente invention,
- la figure 2 est une vue en perspective d'une pièce de liaison du berceau à la structure de caisse,
- la figure 3 est une vue analogue à la figure 2, où certains éléments complémentaires ont été représentés.

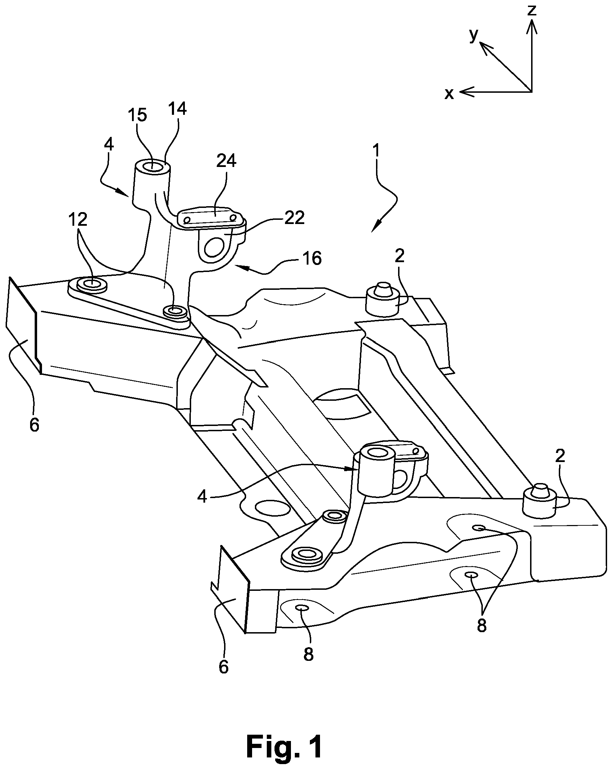

Selon l'invention, en référence à la figure 1, un berceau 1, préférentiellement en acier, formant un cadre, prévu pour être disposé à l'avant d'un véhicule automobile, entre les longerons latéraux longitudinaux dudit véhicule, comporte des moyens de fixation arrière 2, ainsi que des moyens de fixation avant. Ces derniers se présentent sous la forme de cornes 4, permettant une extension selon l'axe z vertical normalisé.

En effet, dans la partie avant du véhicule, les longerons, dans leur partie antérieure, présentent une élévation pour la liaison du groupe moto-propulseur.

La partie avant du berceau comporte des surfaces sensiblement verticales 6 de liaison d'un élément absorbeur de choc, plus communément dénommé « crash-box ». La structure en chape du berceau présente des points de fixation 8 des bras de support de roue et d'éléments de suspension, non représentés.

Selon l'invention, les cornes 4 de liaison de la partie avant du berceau aux longerons, éléments de structure de caisse, se présentent sous une forme monobloc, en étant préférentiellement issus de fonderie, et avantageusement de fonderie d'aluminium, permettant une réduction de poids.

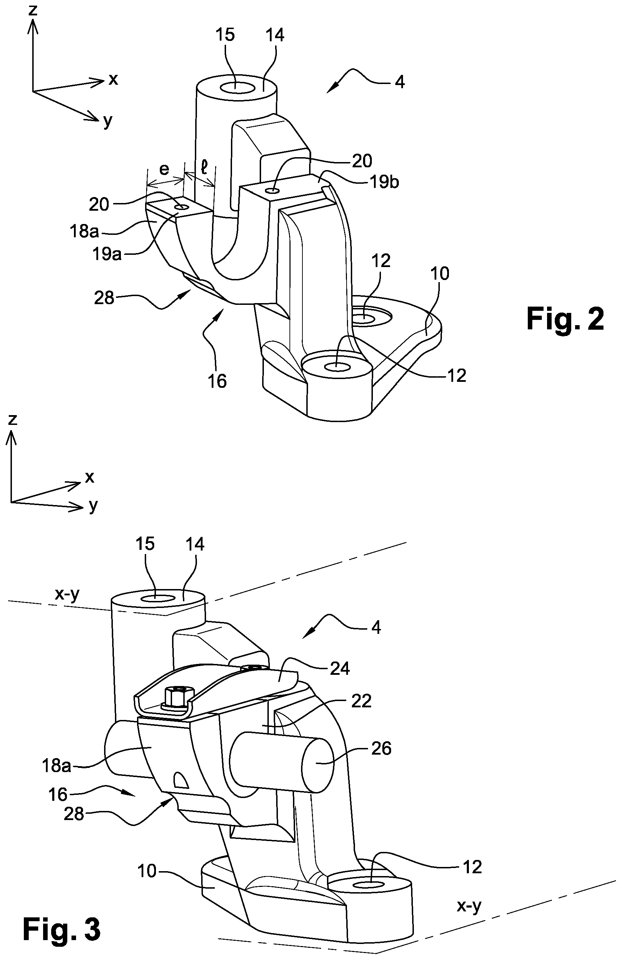

En référence également aux figures 2 et 3, ces cornes 4 présentent une base plane 10 dans le plan x-y normalisé, possédant deux trous 12 d'axe vertical z pour la fixation des cornes sur la partie supérieure du berceau.

Afin de fixer les cornes aux longerons ou éléments équivalents de structure de caisse, les cornes 4 comportent, en partie supérieure, un cylindre 14 creux sensiblement vertical, l'ouverture 15 permettant la liaison, par assemblage mécanique de type vissage, aux longerons, selon le plan x-y normalisé. D'autres techniques d'assemblage peuvent être envisagées, tel le soudage, pour la fixation des cornes au berceau et/ou des cornes aux longerons.

Entre la base 10 et le cylindre 14, les cornes présentent une partie latérale renflée 16, cintrée en forme de U dans un plan x-z, préférentiellement orienté vers l'arrière du véhicule lorsque la corne est fixée sur le berceau. Les segments 18a, 18b formant le U présentent une largeur ℓ, selon l'axe y, suffisante pour la réception d'un palier 22.

Par ailleurs, les segments 18a, 18b présentent une épaisseur e, selon l'axe x, qui peut être variable selon la longueur des segments, mais qui est suffisamment importante à l'extrémité libre des segments pour que les surfaces planes 19a, 19b ainsi réalisées selon un plan x-y, permettent la fixation d'une plaque 24, par l'intermédiaire de trous borgnes filetés 20.

Tel que le montre la figure 3, la forme cintrée en U de la partie renflée 16 permet ainsi de loger un palier 22 préférentiellement en caoutchouc, de guidage d'une barre anti-dévers 26, représentée partiellement sur cette figure. La plaque 24 est une plaque de compression du palier.

Selon l'invention, la réalisation de la forme cintrée de réception du palier présente un segment 18b issu de la partie massive de la corne, c'est-à-dire situé dans le plan général y-z de la corne, et un segment 18a formant, avec la partie cintrée, une extension de la corne longitudinalement vers l'arrière, lorsque la corne est mise en place sur le berceau.

Selon l'invention, le segment 18a présente une réduction locale d'épaisseur sous la forme d'une concavité 28. Cette zone en creux permet, localement, d'affaiblir la résistance mécanique afin de constituer, en cas de choc, une zone privilégiée de déformation, voire de rupture du support de la barre anti-dévers 26, afin que cette barre anti-dévers et son support puissent absorber une partie de l'énergie en cas de choc avant sans générer de contraintes fortes et/ou de modifications structurelles des cornes 4 et des longerons.

Ainsi, la réalisation de cornes monobloc, préférentiellement en aluminium, comportant un logement de palier de guidage d'une barre anti-dévers, tout en présentant une zone de fusibilité pour permettre à ladite barre de « s'effacer » lors d'un choc avant, réduit considérablement le nombre de pièces et de fixations pour réaliser l'ensemble des fonctions décrites.

## Revendications

1. Dispositif de liaison entre un berceau (1) d'un véhicule automobile et un élément de structure de caisse dudit véhicule, ledit dispositif comprenant une corne (4) monobloc présentant une base (10) de raccordement au berceau (1) ainsi qu'une partie supérieure de raccordement à un élément de structure de caisse, corne (4) présentant entre la base (10) et la partie supérieure, une partie latérale (16) comportant une forme cintrée en U de réception d'un palier (22) de guidage d'une barre anti-dévers (26), la partie latérale (16) comportant deux faces planes (19a, 19b) aux extrémités de la forme en U pour la fixation d'une plaque de compression (24) du palier de guidage (22), la partie latérale (16) étant disposée vers l'arrière du véhicule lorsque la corne (4) est fixée sur le berceau, **caractérisé en ce que** la paroi délimitant la forme cintrée de la partie latérale (16) présente une diminution locale d'épaisseur (28).

2. Dispositif selon la revendication 1, **caractérisé en ce que** la corne (4) est en aluminium, issue de moulage, et le berceau est en acier.

3. Véhicule automobile comportant une caisse supportant un berceau, **caractérisé en ce que** le berceau est lié à un élément de structure de caisse par un dispositif conforme à l'une des revendications 1 à 2.

4. Véhicule selon la revendication précédente, **caractérisé en ce que** le berceau est disposé à l'avant du véhicule.

## Patentansprüche

1. Verbindungsvorrichtung zwischen einem Hilfsrahmen (1) eines Kraftfahrzeugs und einem Karosseriestrukturelement des Fahrzeugs, wobei die Vorrichtung ein einstückiges Horn (4) enthält, das eine Basis (10) für die Verbindung mit dem Hilfsrahmen (1) sowie einen oberen Verbindungsteil mit einem Karosseriestrukturelement enthält,
wobei das Horn (4) zwischen der Basis (10) und dem oberen Teil einen Seitenteil (16) aufweist, der eine U-förmig gebogene Form zur Aufnahme eines Führungslagers (22) eines Querstabilisators (26) aufweist, wobei der Seitenteil (16) zwei ebene Seiten (19a, 19b) an den Enden der U-Form zur Befestigung einer Druckplatte (24) des Führungslagers (22) aufweist, wobei der Seitenteil (16) zur Rückseite des Fahrzeugs angeordnet ist, wenn das Horn (4) am Hilfsrahmen befestigt ist, **dadurch gekennzeichnet, dass**
die die gebogene Form des Seitenteils (16) begrenzende Wand eine lokale Dickenverringerung (28) aufweist.

2. Vorrichtung nach Anspruch 1, **dadurch gekennzeichnet, dass** das aus einem Formguss stammende Horn (4) aus Aluminium und der Hilfsrahmen aus Stahl ist.

3. Kraftfahrzeug, das eine einen Hilfsrahmen tragende Karosserie aufweist, **dadurch gekennzeichnet, dass** der Hilfsrahmen durch eine Vorrichtung nach einem der Ansprüche 1 bis 2 mit einem Karosseriestrukturelement verbunden ist.

4. Fahrzeug nach dem vorhergehenden Anspruch, **dadurch gekennzeichnet, dass** der Hilfsrahmen an der Vorderseite des Fahrzeugs angeordnet ist.

## Claims

1. Link device between a cradle (1) of a motor vehicle and a structural element of the body of said vehicle, said device comprising a single-piece ear (4) having a base (10) for connection to the cradle (1) as well as an upper portion for connection to a structural element of the body, the ear (4) having, between the base (10) and the upper portion, a lateral portion (16) comprising a bent U-shape for receiving a bearing (22) for guiding an anti-roll bar (26), the lateral portion (16) including two plane surfaces (19a, 19b) at the extremities of the U-shape for the attachment of a compression plate (24) for the guide bearing (22), the lateral portion (16) being positioned towards the rear of the vehicle when the ear (4) is attached to the cradle, **characterized in that** the wall delimiting the bent shape of the lateral portion (16) exhibits a local reduction in thickness (28).

2. Device according to Claim 1, **characterized in that** the ear (4) is made of aluminum, produced by molding, and the cradle is made of steel.

3. Motor vehicle including a body supporting a cradle, **characterized in that** the cradle is linked to a structural element of the body by a device according to either of Claims 1 and 2.

4. Vehicle according to the preceding claim, **characterized in that** the cradle is positioned at the front of the vehicle.
